# EUROPÄISCHE PATENTANMELDUNG

(11) **EP 4 686 697 A1**
(43) Veröffentlichungstag der Anmeldung: **04.02.2026**
(21) Anmeldenummer: 24020247.3
(22) Anmeldetag: 29.07.2024
(51) Int. Cl.: C01B 3/34, C01B 3/38

(54) **VERFAHREN UND ANLAGE ZUR HERSTELLUNG EINES VERFAHRENSPRODUKTS SOWIE VERFAHREN ZUR BEREITSTELLUNG EINER DERARTIGEN ANLAGE**

(71) Anmelder: Linde GmbH, 82049 Pullach (DE)
(72) Erfinder: Behrens, Axel, 82049 Pullach (DE); Bohn, Jan-Peter, 82049 Pullach (DE); Ettner, Florian, 82049 Pullach (DE); Helfenbein, Sebastian, 82049 Pullach (DE); Krebs, Benjamin, 82049 Pullach (DE); Müller-Thorwart, Ole, 82049 Pullach (DE)
(74) Vertreter: Fischer, Werner

(57) **Zusammenfassung**

Ein Verfahren (100, 200) zur Bereitstellung eines Verfahrensprodukts (21) wird vorgeschlagen, wobei das Verfahren (100, 200) das Bearbeiten eines kohlenstoffhaltigen Einsatzes (1) in einer Bearbeitungssequenz (110, 120, 130, 140, 150) unter Erhalt eines Kohlendioxid enthaltenden ersten Komponentengemischs (17), und das Abtrennen (160) zumindest eines Teils des Kohlendioxids aus dem ersten Komponentengemisch (17) oder einem Teil hiervon unter Erhalt eines das Verfahrensprodukt enthaltenden zweiten Komponentengemischs (20) umfasst, wobei die Bearbeitungssequenz (110, 120, 130, 140, 150) einen elektrisch beheizten Umsetzungsschritt (120) und einen stromauf und/oder stromab hiervon angeordneten feuerungsbeheizten Umsetzungsschritt (130) umfasst. Eine entsprechende Anlage wird ebenfalls vorgeschlagen.

## Beschreibung

### Gebiet

Die vorliegende Offenbarung betrifft die Herstellung eines Verfahrensprodukts.

### Hintergrund

Bei der industriellen Herstellung von Wasserstoff aus kohlenstoffhaltigen Einsatzstoffen mittels Dampfreformierung, aber auch bei anderen Verfahren zur Herstellung von Verfahrensprodukten, bei denen ein Brennstoff zur Beheizung von Reaktoren verfeuert wird, besteht der Wunsch nach einer Dekarbonisierung.

Ein aktueller Ansatz hierfür beruht beispielsweise auf der Entfernung von Kohlendioxid aus einem bei der Verfeuerung des Brennstoffs anfallenden Rauchgas, insbesondere mittels Aminwäsche. Auf diese Weise können ca. 95% des im Brennstoff befindlichen Kohlenstoffs als Kohlendioxid entfernt werden. Dieses Verfahren ist allerdings aufgrund des niedrigen Partialdrucks von Kohlendioxid im Rauchgas apparativ aufwändig und durch die für die Regenerierung des Amins erforderliche Energie auch im Betrieb kostspielig. Daher ist der Einsatz in der Praxis bisher begrenzt.

Wesentlich einfacher kann das im jeweiligen Prozess, also nicht durch die Verbrennung des Brennstoffs, sondern durch die Umsetzung eines Einsatzes in der jeweiligen Reaktion, entstehende Kohlendioxid aus einem entsprechenden Prozessgas, bei der Dampfreformierung also einem Synthesegas, abgetrennt werden. Hierdurch ergeben sich allerdings nur Abtrennraten von Kohlenstoff von ca. 60%, wenn das Kohlendioxid aus dem Rauchgas nicht abgetrennt wird.

Vor diesen Hintergrund besteht der Bedarf nach verbesserten Ansätzen zur Herstellung von Verfahrensprodukten.

### Übersicht

Vor diesem Hintergrund werden Verfahren und eine Anlage mit den Merkmalen der unabhängigen Patentansprüche vorgeschlagen. Ausgestaltungen sind Gegenstand der abhängigen Patentansprüche und der nachfolgenden Beschreibung.

Das vorgeschlagene Verfahren dient zur Bereitstellung eines Verfahrensprodukts und umfasst das Bearbeiten eines kohlenstoffhaltigen Einsatzes in einer Bearbeitungssequenz unter Erhalt eines Kohlendioxid enthaltenden ersten Komponentengemischs, und das Abtrennen zumindest eines Teils des Kohlendioxids aus dem ersten Komponentengemisch oder einem Teil hiervon unter Erhalt eines das Verfahrensprodukt enthaltenden zweiten Komponentengemischs. Die Bearbeitungssequenz umfasst in dem vorgeschlagenen Verfahren einen elektrisch beheizten Umsetzungsschritt und einen stromauf und/oder stromab hiervon angeordneten feuerungsbeheizten Umsetzungsschritt.

Durch den Einsatz des vorgeschlagenen Verfahrens und seiner Ausgestaltungen lässt sich das Kohlendioxid im Prozessgas in weit überwiegendem Umfang rückgewinnen, und je nach Reihenfolge des elektrisch beheizten Umsetzungsschritts und des stromauf und/oder stromab hiervon angeordneten feuerungsbeheizten Umsetzungsschritts lassen sich auch die Kohlendioxidemissionen aus dem Rauchgas stark reduzieren. Die aus einem Prozessgas, beispielsweise Synthesegas, erreichbaren Abtrennraten von Kohlendioxid steigen von ca. 60% auf ca. 70% bei einem vorgeschalteten elektrisch beheizten Umsetzungsschritt und auf ca. 90% bei einem nachgeschalteten elektrisch beheizten Umsetzungsschritt. Details werden unter Bezugnahme auf Ausgestaltungen der Erfindung unten erläutert.

In Ausgestaltungen des vorgeschlagenen Verfahrens ist das Verfahrensprodukt Wasserstoff, das erste Komponentengemisch enthält Wasserstoff, und der elektrisch beheizte Umsetzungsschritt und der feuerungsbeheizte Umsetzungsschritt sind Reformierungsschritte. Das erste Komponentengemisch ist insbesondere ein Synthesegas bekannter Art. Entsprechende Ausgestaltungen eignen sich insbesondere zur Nachrüstung existierender Verfahren bzw. Anlagen, wie ebenfalls unten noch erläutert. Wie ebenfalls bereits erwähnt, sind das vorgeschlagene Verfahren und seine Ausgestaltungen jedoch nicht auf die Herstellung von Wasserstoff beschränkt, sondern können auch im Zusammenhang mit der Herstellung anderer Verfahrensprodukte zum Einsatz kommen.

In Ausgestaltungen des vorgeschlagenen Verfahrens ist vorgesehen, dass die Bearbeitungssequenz einen oder mehrere Einsatzaufbereitungsschritte stromauf des elektrisch beheizten Umsetzungsschritts und stromauf des feuerungsbeheizten Umsetzungsschritts und/oder einen oder mehrere Wassergaskonversionsschritte stromab des elektrisch beheizten Umsetzungsschritts und stromauf des feuerungsbeheizten Umsetzungsschritts umfasst. Die Wassergaskonversion, auch als Wassergasshift bezeichnet, ist bekannt und dient im vorliegenden Fall zur Umsetzung von Kohlenmonoxid mit Wasserdampf zu weiterem Wasserstoff. Hierbei kann eine Hoch-, Mittel- und Niedertemperaturkonversion zum Einsatz kommen. In Ausgestaltungen des vorgeschlagenen Verfahrens kann beispielsweise auch eine Niedertemperaturkonversion nachgerüstet werden.

In Ausgestaltungen des vorgeschlagenen Verfahrens erfolgt das Abtrennen zumindest eines Teils des Kohlendioxids aus dem ersten Komponentengemisch auf einem Druck in einem Bereich von 10 bis 40 bar, 20 bis 30 bar oder 15 bis 35 bar. In einem derartigen Druckbereich ist die Kohlendioxidentfernung besonders effektiv durchführbar, insbesondere im Vergleich zu einer Entfernung aus einem im Wesentlichen drucklosen Rauchgas.

In Ausgestaltungen des vorgeschlagenen Verfahrens ist vorgesehen, dass das zweite Komponentengemisch einer Produktaufbereitung unter Erhalt des Verfahrensprodukts unterworfen wird. Die Produktaufbereitung kann im Fall von Wasserstoff als Verfahrensprodukt beispielsweise eine Aufbereitung von sogenanntem Rohwasserstoff, dem zweiten Komponentengemisch, zu Reinwasserstoff umfassen. Hierbei kann insbesondere eine Druckwechseladsorption verwendet werden, wie an sich im Bereich der Wasserstoffaufbereitung bekannt. Hierbei handelt es sich um eine erprobte und robuste Technologie.

In Ausgestaltungen des vorgeschlagenen Verfahrens ist vorgesehen, dass ein bei der Produktaufbereitung verbleibendes Restgemisch oder ein Teil hiervon und/oder ein Teil des zweiten Komponentengemischs zum Befeuern des feuerungsbeheizten Umsetzungsschritts verwendet wird. Bei beiden Gasgemischen handelt es sich aufgrund der stromauf erfolgten Umsetzung von Kohlenwasserstoffen, der Umsetzung von Kohlenmonoxid zu Kohlendioxid, und der Abtrennung von Kohlendioxid, um kohlenstoffarme Brennstoffe bzw. Brennstoffe, die kein zusätzliches Kohlendioxid in die Verbrennung einbringen.

Die vorgeschlagene Anlage zur Bereitstellung eines Verfahrensprodukts ist zur Durchführung eines Verfahrens eingerichtet, das das Bearbeiten eines kohlenstoffhaltigen Einsatzes in einer Bearbeitungssequenz unter Erhalt eines Kohlendioxid enthaltenden ersten Komponentengemischs und das Abtrennen zumindest eines Teils des Kohlendioxids aus dem ersten Komponentengemisch oder einem Teil hiervon unter Erhalt eines das Verfahrensprodukt enthaltenden zweiten Komponentengemischs umfasst, wobei die Bearbeitungssequenz einen elektrisch beheizten Umsetzungsschritt und einen stromauf oder stromab hiervon angeordneten feuerungsbeheizten Umsetzungsschritt umfasst.

Vorteile und Merkmale, die bezüglich des vorgeschlagenen Verfahrens und seinen Ausgestaltungen beschrieben wurden, gelten auch für die vorgeschlagene Anlage und umgekehrt. Diese werden entsprechend nur einmalig beschrieben, und auf die jeweiligen Erläuterungen kann verwiesen werden.

Entsprechendes gilt auch für eine Anlage, die dazu eingerichtet sein kann, ein Verfahren gemäß einer beliebigen Ausgestaltung durchzuführen.

Das vorgeschlagene Verfahren zur Bereitstellung einer entsprechenden Anlage umfasst eine Anlage, die zur Durchführung des feuerungsbeheizten Umsetzungsschritts eingerichtet und zur Durchführung des elektrisch beheizten Umsetzungsschritts nicht eingerichtet ist, durch Nachrüstung zur Durchführung des elektrisch beheizten Umsetzungsschritts zu ertüchtigen.

Besondere Vorteile einer derartigen Nachrüstung bestehen, wie unten erläutert, darin, dass keine nennenswerten Eingriffe in die vorhandenen Anlagenkomponenten, beispielsweise eines befeuerten Dampfreformers, notwendig sind und daher die Nachrüstung besonders einfach und kostengünstig durchführbar ist.

In bestimmten Ausgestaltungen kann die Nachrüstung auch eine Bereitstellung eines Niedertemperaturkonversionsschritts umfassen. Hierdurch kann die Abtrennrate von Kohlenstoff als Kohlendioxid deutlich erhöht werden.

### Zeichnungen

Im Rahmen der vorliegenden Offenbarung vorgeschlagene Aspekte werden anhand der beiliegenden Zeichnung näher erläutert. Dabei zeigen
Figur 1 eine Ausgestaltung eines vorgeschlagenen Verfahrens; und
Figur 2 eine weitere Ausgestaltung eines vorgeschlagenen Verfahrens.

### Ausführungsformen

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Funktionen, Merkmale, Strukturen und/oder andere Aspekte nicht als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus diesen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende in ihrer Funktion einander entsprechende, baulich identische oder vergleichbar aufgebaute Elemente, Verfahrensschritte usw. können mit identischen Bezugszeichen angegeben sein.

Die nachfolgenden Erläuterungen und Definitionen, die einige Grundlagen der Erfindung betreffen, können für alle oder einen Teil der hier vorgestellten Ausgestaltungen gelten, und die Erläuterung bestimmter Aspekte im Zusammenhang mit nur einem Teil oder einer der Ausgestaltungen soll nicht dahingehend verstanden werden, dass diese Aspekte nicht auch mit anderen oder allen Ausgestaltungen, soweit technisch möglich und sinnvoll, verwirklicht sein können.

Sämtliche hier verwendete Prozentangaben können sich auf Mol-, Mengen- oder Volumenanteile beziehen. Druckangaben in bar sind, soweit nicht anders erläutert, insbesondere als Absolutdrücke zu verstehen.

Die Konjunktion "und/oder" soll, wenn in einer Aufzählung vor dem letzten Element der Aufzählung verwendet, so verstanden werden, dass alle in der Aufzählung zuvor genannten Begriffe in beliebiger Weise miteinander kombiniert werden können. Mit anderen Worten ist mit "A, B und/oder C" "A und/oder B und/oder C" oder "wenigstens eines der Elemente A, B, C in beliebiger Kombination" gemeint.

Die Wasserstoffherstellung im industriellen Maßstab basiert hauptsächlich auf Kohlenwasserstoffen und umfasst beispielsweise die Dampfreformierung von Erdgas. Anstelle einer Erläuterung des bereits Bekannten wird auf einschlägige Fachliteratur wie die Artikel "Gas Production, 2. Processes" und "Hydrogen, 2. Production" in Ullmann's Encyclopedia of Industrial Chemistry (2012) verwiesen.

Die Wasserstoffherstellung stellt indes nur einen Anwendungsbereich der vorliegenden Erfindung dar. Das hier vorgeschlagene Verfahren und seine Ausgestaltungen eignen sich in gleicher Weise für andere endotherme verfahrenstechnische Prozesse oder endotherme Verfahrensschritte in solchen Prozessen, beispielsweise zur Herstellung von bestimmten Edukten oder Zwischenprodukten. Beispiele sind Prozesse zur Herstellung von Kohlenmonoxid oder zur kombinierten Herstellung von Wasserstoff und Kohlenmonoxid, Prozesse zur Herstellung von Ammoniak, Prozesse zur Herstellung von Methanol, Prozesse zur Dehydrierung von Alkanen wie Propan oder Butan zu Alkenen oder Dialkenen wie Propylen oder Butadien, Prozesse zur Dehydrierung von Ethylbenzol zu Styrol, Prozesse zur reversen Wassergaskonversion und Prozesse zur thermischen Spaltung von Ammoniak.

Nachfolgend wird insbesondere die Wasserstoffherstellung erläutert, wobei die entsprechenden Erläuterungen aber auch für die anderen erläuterten Prozesse bzw. endotherme Schritte in diesen Prozessen gelten. Ist daher nachfolgend von einem "Umsetzungsschritt" die Rede, kann es sich hierbei um einen (Dampf-) Reformierungsschritt handeln und umgekehrt. Entsprechendes gilt für die jeweiligen Apparate bzw. Anlagenteile.

Die durch Nachrüstung einer Kohlendioxidabtrennung im Synthesegasweg von Wasserstoffanlagen erreichbare Abtrennrate von Kohlendioxid von ca. 60% (bezogen auf den gesamten Kohlenstoff, der im Einsatzgas und Brennstoff enthalten ist), wird in der Regel als nicht ausreichend angesehen, während eine zusätzliche Kohlendioxidabtrennung aus dem Rauchgas als unverhältnismäßig aufwendig betrachtet wird. Auch dies gilt für andere Verfahrensprodukte in ähnlicher Weise.

Das vorgeschlagene Verfahren ermöglicht dagegen mit vertretbarem Aufwand eine Abtrennrate von Kohlendioxid von deutlich über 60%, auch wenn nur eine energetisch effiziente Kohlendioxidabtrennung aus dem Synthesegas oder allgemeiner einem ersten Komponentengemisch, installiert wird.

In dem vorgeschlagenen Verfahren wird beispielsweise eine konventionelle Anlage zur Herstellung eines Verfahrensprodukts, beispielsweise von Wasserstoff auf Grundlage einer Dampfreformierung, so modifiziert, dass durch eine Kohlendioxidabtrennung aus einem Produktgemisch, im Beispiel Synthesegas, bei hohem Druck die Abtrennrate von Kohlendioxid wesentlich gesteigert wird. Die Steigerung erfolgt dabei auf typischerweise deutlich über 60% (z.B. auf rund 70 bis 90%). Dies wird durch den Einsatz, beispielsweise eine Nachrüstung, des elektrisch beheizten Umsetzungsschritts, im Beispiel ein elektrisch beheizter Dampfreformierungsschritt, erzielt. Dieser wird einem befeuerten Umsetzungsschritt, im Beispiel einem befeuerten Dampfreformierungsschritt, in Serie vor- und/oder nachgeschaltet betrieben. Der Bedarf an externem Heizgas für den befeuerten Umsetzungsschritt kann durch geeignete Verfahrensführung bis auf null gesenkt werden.

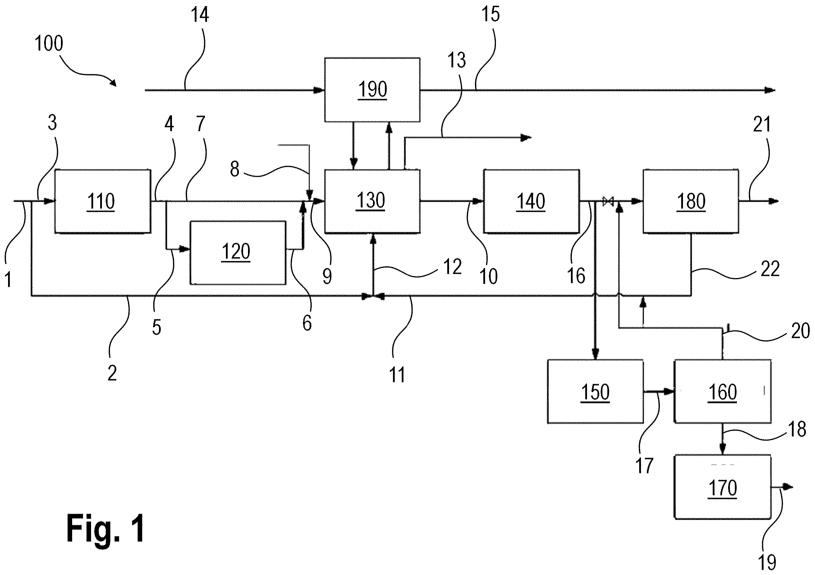

Durch die Vorschaltung eines elektrisch beheizten Umsetzungsschritts in einem Teilstrom zum befeuerten Umsetzungsschritt (siehe unten Figur 1) besteht die Möglichkeit, die Produktkapazität der Anlage zu steigern und/oder die Menge an Brennstoff gegenüber der konventionellen Anlage bei gleicher Produktion des Verfahrensprodukts zu verringern. Durch den Betrieb des elektrisch beheizten Umsetzungsschritts mit "grünem" Strom und einer Drosselung der Feuerungsleistung des befeuerten Umsetzungsschritts sinken die spezifischen Emissionen des Verfahrens bezogen auf das gesamte Verfahrensprodukt.

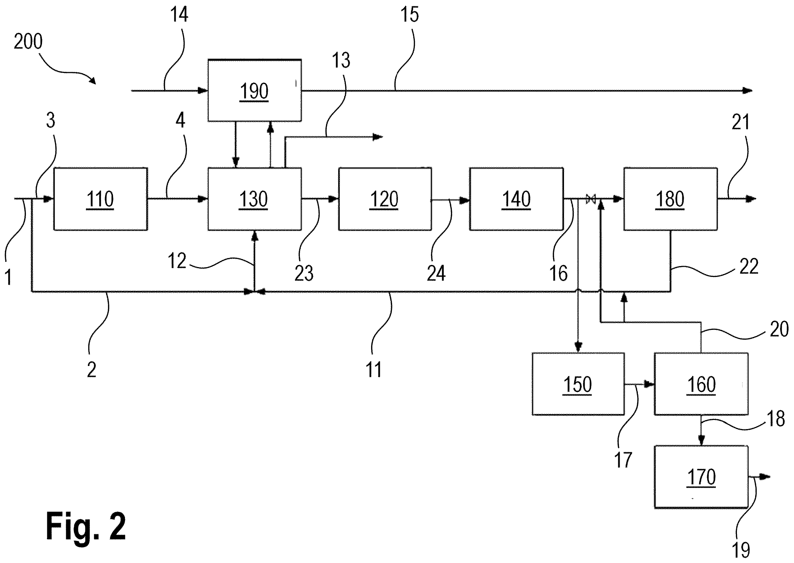

Wie zu Figur 2 erläutert, hat der elektrisch beheizte Umsetzungsschritt im Falle einer Umsetzung von Methan durch Dampfreformierung den großen Vorteil, dass dieser eine höhere Austrittstemperatur und damit einen niedrigeren Methanschlupf erreichen kann als ein konventioneller, befeuerter Umsetzungsschritt. In einer Parallelschaltung von elektrisch beheiztem Umsetzungsschritt und konventionellem, befeuertem Umsetzungsschritt würde mindestens ein Teil des Prozessgases nur bei niedrigerer Temperatur umgesetzt werden, während bei der seriellen Anordnung wie in Figur 2 das gesamte Prozessgas bei der höheren Temperatur umgesetzt werden kann und damit das Gleichgewicht weiter zu den Produkten, im Beispiel Wasserstoff und Kohlendioxid, verschoben wird. Dies ist ein wesentlicher Vorteil der Serienschaltung gegenüber der Parallelschaltung. Außerdem kann bei einer Serienschaltung die Austrittstemperatur des konventionellen, befeuertem Umsetzungsschritts so weit abgesenkt werden, dass nur noch Restgase unterfeuert werden können, aber kein Primärheizgas (z.B. Erdgas) mehr unterfeuert werden muss.

Das vorgeschlagene Verfahren und seine Ausgestaltungen können insbesondere für die Dekarbonisierung existierender Anlagen durch Nachrüstung eines elektrisch betriebenen Zusatzreformers verwendet werden, der den kohlenstoffhaltigen Brennstoffanteil im Reformer reduziert und dadurch die über das Rauchgase emittierte Menge an Kohlendioxid minimiert. Es ist kein Eingriff in einen bestehenden Dampfreformer erforderlich und die Nachrüstung kann insbesondere kompakt ausgeführt werden. Es ergibt sich eine Kapazitätserhöhung bestehender Anlagen durch Elektrifizierung ohne zusätzliche Erhöhung des Erdgasbedarfs.

Das Verfahren ermöglicht ferner eine Reduktion der Dampfexportmenge und damit des Wasserbedarfs bestehender Anlagen. Durch fortschreitende Elektrifizierung der Industrie verliert Dampf als Energieträger in Zukunft voraussichtlich an Wert. Eine Erhöhung der Anlagenflexibilität durch schnelles An- und Abfahren des elektrisch beheizten Umsetzungsschritts ist möglich, und damit eine Lastanpassung gemäß Strom- bzw. Erdgaspreis und -verfügbarkeit. Auch eine Abnahme von negativer Regelenergie aus dem Stromnetz ist möglich, um einen Leistungsüberschuss im Stromnetz auszugleichen. Ein Weiterbetrieb der Anlage ist auch bei 100% Ausfall des elektrisch beheizten Umsetzungsschritts möglich. Das Risiko der Einbindung einer neuen Technologie ist damit weitgehend minimiert.

Die üblicherweise durch Kohlendioxidentfernung aus dem Synthesegas erreichbaren Abtrennraten von Kohlendioxid steigen von ca. 60% auf ca. 70% bei vorgeschaltetem elektrisch beheiztem Umsetzungsschritt und auf ca. 90% bei nachgeschaltetem elektrisch beheiztem Umsetzungsschritt.

Weitere mögliche Ausgestaltungen umfassen eine geeignete Aufteilung des Einsatzstoffs, nachfolgend auch "Roheinsatz" genannt, zwischen konventionellem, befeuertem und elektrischem Umsetzungsschritt, wodurch der Bedarf an Primärheizgas (z.B. Erdgas) deutlich (auch bis auf null) gesenkt werden und gleichzeitig ohne Vergrößerung des konventionellen, befeuerten Umsetzungsschritts bei gleichbleibender Produktmenge Einsatzstoff eingespart werden kann.

Durch zusätzliche (teilweise) Verdichtung des Restgases aus einer Produktaufbereitung, die insbesondere unter Verwendung einer Druckwechseladsorption realisiert sein kann, und Rückführung in den Prozess sind auch Abtrennraten von Kohlenstoff von über 90% (z.B. 95%) realisierbar. Falls eine geringere Abtrennrate von Kohlenstoff akzeptabel ist, könnte das Verfahren auch ohne Nachrüstung einer Niedertemperaturkonversion realisiert werden.

In Figur 1 ist ein Verfahren zur Herstellung eines Verfahrensprodukts, hier eines Wasserstoffprodukts, in Form eines vereinfachten Verfahrensdiagramms schematisch veranschaulicht und insgesamt mit 100 bezeichnet.

Dem Verfahren wird in dem dargestellten Beispiel ein kohlenstoffhaltiger Roheinsatz 1, beispielsweise Erdgas, zugeführt von welchem ein Anteil 2 als Brennstoff abgezweigt wird. Der Rest 3 wird einer Einsatzvorbehandlung 110 unterworfen, die beispielsweise eine Entsäuerung und eine Entschwefelung umfassen kann.

Ein entsprechend aufbereiteter Einsatz 4 wird mit Dampf gemischt und zu einem Teil 5 einer elektrisch beheizten Dampfreformierung, d.h. einem elektrisch beheizten Umsetzungsschritt 120, unterworfen, der bzw. dem ein Zwischengemisch 6 entnommen wird. Das Zwischengemisch 6 wird mit einem nicht derartig behandelten Teil 7 des aufbereiteten Einsatzes 4 sowie bei Bedarf mit zusätzlichem Dampf 8 zu einem Einsatzgemisch 9 vereinigt, das einer feuerungsbeheizten Dampfreformierung, d.h. einem feuerungsbeheizten Umsetzungsschritt 130 zugeführt wird. Dampf 8 kann auch an anderer Stelle, beispielsweise stromauf in den aufbereiteten Einsatz 4, eingebracht werden.

Dem feuerungsbeheizten Umsetzungsschritt 130 wird ein Produktgemisch 10 entnommen. Der feuerungsbeheizte Umsetzungsschritt 130 wird mit Brennstoff 12 betrieben, der den Anteil 2 des Roheinsatzes 1 sowie einen Rückführstrom 11 umfasst, dessen Herkunft unten erläutert wird. In dem feuerungsbeheizten Umsetzungsschritt 130 wird ein Rauchgasstrom 13 gebildet, der aus dem Verfahren aus- bzw. geeigneten Behandlungsschritten zugeführt wird. Dem feuerungsbeheizten Umsetzungsschritt 130 ist ein Dampfsystem 190 zugeordnet, dem Kesselspeisewasser 14 zugeführt und Exportdampf 15 entnommen wird. Aus dem Dampfsystem 190 wird ebenfalls der im Prozess genutzte Dampf 8 entnommen.

Das Wasserstoff, Kohlendioxid und Kohlenmonoxid enthaltende Produktgemisch 10 wird einer Kühlung und Hochtemperaturkonversion 140 unterworfen, wo durch Umsetzung von Kohlenmonoxid und Wasser zusätzlicher Wasserstoff und Kohlendioxid gebildet werden. Ein entsprechend gekühltes und hochtemperaturgeshiftetes Produktgemisch 16 wird zumindest zu einem Teil in eine Niedertemperaturshift 150 überführt, wo durch Umsetzung von Kohlenmonoxid und Wasser nochmals weiterer Wasserstoff und Kohlendioxid gebildet werden.

Ein entsprechend niedertemeraturgeshiftetes Produktgemisch 17 wird einer Kohlendioxidabtrennung 160 zugeführt. Das Produktgemisch 17 stellt ein hier als "erstes Komponentengemisch" bezeichnetes Komponentengemisch dar. Die zu dessen Bereitstellung verwendeten Schritte 110, 120, 130, 140 und 150, die bereits erläutert wurden, stellen im hier verwendeten Sprachgebrauch eine "Bearbeitungssequenz" dar.

In der Kohlendioxidabtrennung 160 abgetrenntes Kohlendioxid 18 wird in einer Kohlendioxidaufbereitung 170 beispielsweise durch Reinigen und Verdichten zu einem Kohlendioxidprodukt 19 aufbereitet. Ein Wasserstoffrohprodukt bzw. anderes Rohprodukt 20, hier als "zweites Komponentengemisch" bezeichnet, wird in Anteilen in eine Produktaufbereitung 180 eingespeist und optional zu einem Teil zur Bereitstellung des Rückführstroms 11 verwendet. In der Produktaufbereitung 180 wird das Verfahrensprodukt 21, hier Reinwasserstoff gebildet. Verbleibendes Restgas 22 wird ebenfalls als Teil zur Bereitstellung des Rückführstroms 11 verwendet.

In dem in Figur 1 veranschaulichten Verfahren 100 wird also ein Teil 5 des aufbereiteten Einsatzes 4 nach der Vorbehandlung 110 und vor dem konventionellen, befeuerten Dampfreformierungsschritt 130 abgezweigt und zum elektrischen Dampfreformierungsschritt 120 geführt. Das Verhältnis hängt beispielsweise von den Verfahrensparametern einer existierenden Anlage und der neuen Anlage (z.B. Reformertemperatur, Dampf-/Kohlenstoff-Verhältnis, Feuerungsleistung) und dem zu erreichenden Optimierungsziel ab.

Anschließend werden die reformierten Gase (Synthesegase) 6 aus dem elektrischen Dampfreformierungsschritt 120 und das unreformierte Einsatzgas bzw. dessen Teil 7 wieder zusammengeführt, um möglichst viele Anlagenteile der existierenden Anlage weiter zu nutzen. Je nach Temperaturhöhe, welche sich nach der Zusammenführung der Ströme einstellt, kann optional noch Wasser oder Dampf 8 in den Strom eingebracht werden, um die Temperatur für den nachgeschalteten konventionellen, befeuerten Dampfreformierungsschritt 130 einzustellen. Hierdurch sind u.U. niedrigere Dampfmengen für den elektrischen Dampfreformierungsschritt 120 und eine niedrigere Eingangstemperatur für den befeuerten Dampfreformierungsschritt 130 möglich.

Sollte die existierende Anlage nur über eine Hochtemperaturkonvertierung 140 verfügen, kann durch Einbringung einer Mittel- oder Niedertemperaturkonvertierung die Wasserstoffausbeute und gleichzeitig die Abtrennrate von Kohlendioxid erhöht werden, da dann mehr Kohlenmonoxid mit dem im Synthesegas enthaltenen Wasserdampf in Wasserstoff und Kohlendioxid umgewandelt wird.

Anschließend wird das Kohlendioxid aus dem Synthesegas nahezu vollständig entfernt, durch etablierte Verfahren, wie z.B. eine Aminwäsche oder durch adsorptive oder kryogene Verfahren. Das abgetrennte Kohlendioxid 18 kann weiter verdichtet und aufgereinigt werden, und zwar in dem Schritt 170, je nach erforderlicher Qualität zur Weiterverwendung oder Einlagerung.

Das nahezu kohlendioxidfreie Synthesegas 20, das nun größtenteils aus Wasserstoff besteht (und deshalb auch als Rohwasserstoff bezeichnet wird) wird in der Produktaufbereitung 180 weiter aufgereinigt (z.B. durch Druckwechseladsorption) und dann als Produkt 21 abgegeben. Ein Teil des kohlendioxidfreien Synthesegases 20 kann auch als kohlenstoffarmer Brennstoff dem konventionellen Dampfreformer zugeführt werden und kann den ursprünglich eingesetzten, kohlenstoffreichen Brennstoff (z.B. Erdgas) teilweise oder vollständig ersetzen.

In Figur 2 ist ein weiteres Verfahren zur Herstellung eines Verfahrensprodukts, hier eines Wasserstoffprodukts, in Form eines vereinfachten Verfahrensdiagramms schematisch veranschaulicht und insgesamt mit 200 bezeichnet.

Das Verfahren 200 gemäß Figur 2 unterscheidet sich ab der Kühlung und Hochtemperaturshift 140 nicht wesentlich von dem Verfahren 100 gemäß Figur 1. Auch der Betrieb und die Beschickung der Einsatzvorbehandlung 110 mit dem Anteil 3 des Roheinsatzes 1, sowie die Versorgung der feuerungsbeheizten Dampfreformierung 130 und dessen Kopplung mit dem Dampfsystem 140 können im Wesentlichen identisch oder vergleichbar realisiert sein.

In Abweichung zu dem in Figur 1 veranschaulichten Verfahren 100 ist in dem in Figur 2 veranschaulichten Verfahren 200 jedoch die elektrisch beheizte Dampfreformierung 120 der feuerungsbeheizten Dampfreformierung 130 nachgeschaltet. Der aufbereitete Einsatz 4 wird im veranschaulichten Beispiel vollständig der feuerungsbeheizten Dampfreformierung 130 zugeführt. Ein hierin erhaltenes Produktgemisch, hier mit 23 bezeichnet, wird in die elektrisch beheizte Dampfreformierung 120 geführt, ein dort erhaltenes Produktgemisch, hier mit 24 bezeichnet, in die Kühlung und Hochtemperaturshift 140.

Entgegen der oben in Figur 1 beschriebenen Ausführung des Verfahrens 100 wird das Einsatzgas in dem in Figur 2 gezeigten Verfahren 200 nach der Vorbehandlung in den konventionellen, befeuerten Umsetzungsschritt 130 geleitet und danach zum elektrischem Dampfreformer 120 geführt. Das Verhältnis, welche Mengen an Einsatzgas in welchem der beiden Reformer umgesetzt werden, hängt wie oben von den Verfahrensparametern der existierenden Anlage ab.

Das Synthesegas 24 wird nach Reformierung in den beiden Reformern in den existierenden Anlagenteilen weiter behandelt. Durch die Nachschaltung des elektrischen Dampfreformers 120 sind u.U. höhere Austrittstemperaturen aus dem elektrischen Dampfreformer 120 als bei einem konventionellen Dampfreformer möglich, dies hat einen niedrigeren Methanschlupf beim Austritt aus dem elektrischen Dampfreformer 120 zur Folge.

## Patentansprüche

1. Verfahren (100, 200) zur Bereitstellung eines Verfahrensprodukts (21), wobei das Verfahren (100, 200) die folgenden Schritte umfasst:
Bearbeiten eines kohlenstoffhaltigen Einsatzes (1) in einer Bearbeitungssequenz (110, 120, 130, 140, 150) unter Erhalt eines Kohlendioxid enthaltenden ersten Komponentengemischs (17); und
Abtrennen (160) zumindest eines Teils des Kohlendioxids aus dem ersten Komponentengemisch (17) oder einem Teil hiervon unter Erhalt eines das Verfahrensprodukt enthaltenden zweiten Komponentengemischs (20),
wobei die Bearbeitungssequenz (110, 120, 130, 140, 150) einen elektrisch beheizten Umsetzungsschritt (120) und einen stromauf und/oder stromab hiervon angeordneten feuerungsbeheizten Umsetzungsschritt (130) umfasst.

2. Verfahren (100, 200) nach Anspruch 1, wobei das Verfahrensprodukt Wasserstoff ist, wobei das erste Komponentengemisch Wasserstoff enthält, und
wobei der elektrisch beheizte Umsetzungsschritt (120) und der feuerungsbeheizte Umsetzungsschritt (130) Reformierungsschritte sind.

3. Verfahren (100, 200) nach Anspruch 2, wobei die Bearbeitungssequenz (110, 120, 130, 140, 150) umfasst:
einen oder mehrere Einsatzaufbereitungsschritte (110) stromauf des elektrisch beheizten Umsetzungsschritts (120) und stromauf des feuerungsbeheizten Umsetzungsschritts (130); und/oder
einen oder mehrere Wassergaskonversionsschritte (140, 150) stromab des elektrisch beheizten Umsetzungsschritts (120) und stromab des feuerungsbeheizten Umsetzungsschritts (130).

4. Verfahren (100, 200) nach einem der vorstehenden Ansprüche, wobei das Abtrennen (160) zumindest eines Teils des Kohlendioxids auf einem Druck in einem Bereich von 10 bis 40, 15 bis 35 oder 20 bis 30 bar durchgeführt wird.

5. Verfahren (100, 200) nach einem der vorstehenden Ansprüche, wobei das zweite Komponentengemisch (20) einer Produktaufbereitung (180) unter Erhalt des Verfahrensprodukts (21) unterworfen wird.

6. Verfahren (100, 200) nach einem der vorstehenden Ansprüche, wobei die Produktaufbereitung (180) unter Verwendung einer Druckwechseladsorption durchgeführt wird.

7. Verfahren (100, 200) nach Anspruch 6, wobei ein bei der Produktaufbereitung (180) verbleibendes Restgas (22) oder ein Teil hiervon und/oder ein Teil des zweiten Komponentengemisch (20) zum Befeuern des feuerungsbeheizten Umsetzungsschritts (130) verwendet wird.

8. Anlage zur Bereitstellung eines Verfahrensprodukts (21), die zur Durchführung eines Verfahrens (100, 200) mit den folgenden Schritten eingerichtet ist:
Bearbeiten eines kohlenstoffhaltigen Einsatzes (1) in einer Bearbeitungssequenz (110, 120, 130, 140, 150) unter Erhalt eines Kohlendioxid enthaltenden ersten Komponentengemischs (17); und
Abtrennen (160) zumindest eines Teils des Kohlendioxids aus dem ersten Komponentengemisch (17) oder einem Teil hiervon unter Erhalt eines das Verfahrensprodukt enthaltenden zweiten Komponentengemischs (20);
wobei die Bearbeitungssequenz (110, 120, 130, 140, 150) einen elektrisch beheizten Umsetzungsschritt (120) und einen stromauf und/oder stromab hiervon angeordneten feuerungsbeheizten Umsetzungsschritt (130) umfasst.

9. Anlage nach Anspruch 8, wobei die Anlage zur Durchführung eines Verfahrens nach einem der Ansprüche 1 bis 7 eingerichtet ist.

10. Verfahren zur Bereitstellung einer Anlage gemäß Anspruch 8 oder 9, wobei eine Anlage, die zur Durchführung des feuerungsbeheizten Umsetzungsschritts (130) eingerichtet und zur Durchführung des elektrisch beheizten Umsetzungsschritts (120) nicht eingerichtet ist, durch Nachrüstung zur Durchführung des elektrisch beheizten Umsetzungsschritts (120) ertüchtigt wird.

11. Verfahren nach Anspruch 10, wobei die Nachrüstung eine Bereitstellung eines Niedertemperaturkonversionsschritts umfasst.
